# EUROPÄISCHE PATENTSCHRIFT

(11) **EP 0 346 642 B1**
(45) Veröffentlichungstag und Bekanntmachung des Hinweises auf die Patenterteilung: **24.03.1993**
(21) Anmeldenummer: 89109059.9
(22) Anmeldetag: 19.05.1989
(51) Int. Cl.: C05F 9/02

(54) **Gerät zur Umsetzung von Kompost**
Machine for shifting and overturning compost
Appareil pour déplacer et retourner le compost

(30) Priorität: 28.05.1988 DE 3818206
(43) Veröffentlichungstag der Anmeldung: 20.12.1989
(73) Patentinhaber: FIRMA FRIEDRICH BACKHUS NATURDÜNGER, D-26219 Bösel (DE)
(72) Erfinder: Backhus, Friedrich, D-2905 Edewecht Jeddeloh II (DE)
(74) Vertreter: Jabbusch, Wolfgang, Dr.Jur. Jabbusch, Wehser & Lauerwald Patentanwälte

(56) Entgegenhaltungen:
- EP-A- 0 097 217
- EP-A- 0 244 708
- DE-A- 3 517 164
- DE-A- 3 518 487
- DE-B- 2 258 142
- US-A- 2 093 758
- US-A- 3 881 707
- US-A- 4 475 450

## Beschreibung

Die Erfindung betrifft ein mobiles Gerät zur Umsetzung von an stationären Lagerplätzen zu Kompost reifenden Anhäufungen organischer Abfälle, mit einem lenkbaren Fahrwerk für den Vorschub des Gerätes durch eine Anhäufung, einer an der Geratefrontseite im Bereich vor jeder Laufspur des Fahrwerkes angeordneten Räumeinrichtung und mit einer Einrichtung zum Vermischen der beim Durchfahren aufgenommenen und hinter dem Gerät durchmischt wieder abgelegten Abfälle.

Ein mobiles Gerät der vorbezeichneten Gattung ist nach der US-A 3 881 707 bekannt. Das bekannte Gerät kann nur jeweils eine Kompostanhäufung durcharbeiten, die bereits als Reihe zwischen jeweils benachbarten Reihen vorliegt. Zwischen den Reihen müssen Spuren für die Räder des Fahrwerkes freigelassen bleiben. Die bei dem bekannten Gerät vorhandenen Räumeinrichtungen dienen nur dazu, die an und für sich schon freien Spurbereiche freizuhalten und vor allen Dingen zu säubern. Reihen mit zwischenliegenden freien Spurrillen haben den Nachteil, daß sich im gelagerten Kompost befindliches Sickerwasser und vor allen Dingen aus Niederschlägen, z.B. Regen, resultierendes Sickerwasser in den freien und auch nach Durchgang des bekannten Gerätes freibleibenden Spurrillen sammelt. Das gesammelte Regenwasser kann seitlich einsickern und die Kompostmiete im Bodenbereich abkühlen. Die Abkühlung fördert die Bildung von verseuchenden Keimen. Die mit dem bekannten Gerät angelegten Kompostmieten weisen somit Fußbereichemit hoher Feuchte und niedriger Temperatur auf. Bei der Kompostierung können dann die im zu Kompost umzusetzenden Rohstoffe enthaltenen hygienisch bedenklichen Stoffe nicht abgebaut werden. Die nur der Reinigung dienenden Räumungseinrichtungen an dem bekannten Gerät erlauben es nicht, das Gerät durch ein Feld von aufgehäuftem bzw. aufgeschichteten Kompostrohstoff zu fahren. Geräte der hier in Rede stehenden Gattung werden in gewerblichen Kompostierungsbetrieben eingesetzt. Die zur Lagerung und Umsetzung von kompostierbarem Rohstoff benötigten Flächen können eine bestimmte Größenordnung nicht überschreiten, weil andernfalls die Wege, entlang denen Rohstoffe heranzutransportieren sind, zu lang werden. Bei langen Transportwegen ist die Kompostherstellung nicht mehr wirtschaftlich zu betreiben. Bei kleineren Flächen sind jedoch die Geräte nicht mehr ausgelastet, zumal zwischen einzelnen Kompostbearbeitungszeiten längere Ruhezeiten für die Ausreifung gegeben sein müssen. Kompostierungsbetriebe sind deshalb gezwungen, Ablagerungs- und Umsetzungsflächen dorthin zu verlegen, wo sich kurze Anlieferungswege für die benötigten Rohstoffe ergeben. Ist eine Ablagerungsfläche mit einem Gerät durchgearbeitet, kann es zur nächsten Ablagerungsfläche transportiert werden, um dort eine Bearbeitung durchzuführen. Damit ein problemloser Transport der Geräte auf öffentlichen Straßen zwischen den Kompostierungsplätzen möglich ist, darf eine Breite des Transportfahrzeuges einschließlich aufgeladenem Gerät von 2,5 m nicht überschritten werden.

Leistungsfähige Geräte mit großer Durchsatzleistung ermöglichen größeren Mietenquerschnitt. Die leistungsfähigen Geräte sind dadurch in ihrer Arbeitsbreite größer als 2,5 m. So weist das bekannte Gerät z.B. eine Spurbreite von etwa 5,3 m auf, bei einer Gesamtbreite von etwa 5,8 m. Ein derart breites Gerät ist weder als Selbstfahrer noch als auf einen Lastkraftwagen geladenes Ladegut auf öffentlichen Straßen transportierbar.

Der Erfindung liegt die Aufgabe zugrunde, ein selbstfahrendes Gerät zu entwickeln, das ohne freie Spuren auskommt und darüber hinaus transportabel ist.

Diese Aufgabe ist erfindungsgemäß dadurch gelöst, daß jede Räumeinrichtung ein seitlich vor den Einlaß der Vermischeinrichtung gesetztes Leitschild aufweist, dessen Leitfläche mit aktiv arbeitenden Räumwerkzeugen ausgerüstet ist und daß jede Räumeinrichtung um eine vertikale Achse klappbar im Bereich einer Außenecke angelenkt ist.

Das erfindungsgemäße Gerät räumt sich bei seiner Fahrbewegung die eigene Fahrspur vor dem Fahrwerk, während in dem durch eine Spurbreite des Fahrwerks begrenzten Bereich liegende Abfälle aufgenommen, durchmischt und hinter dem Gerät wieder abgelegt werden. Bei dammförmig lagernden Abfällen können folglich die einzelnen Dämme einander auch im Dammfußbereich berühren oder sogar überlappen bzw. kann der Reihenabstand relativ gering gehalten werden. Somit ist der Vorteil einer verbesserten Ausnutzung der Lagerfläche, auf der abgelegte Abfälle zu Kompost ausreifen, gegeben.

Über geräumte Fahrspuren kann das Fahrwerk auch die volle Traktion auf den Untergrund bringen, so daß ausreichende Vorschubkräfte entwickelt werden können, die eine Fortbewegung des Geräts durch die umzusetzenden Abfälle hindurch gewährleisten.

Die Ausbildung der Räumeinrichtungen mit den Arbeitsbereich, bzw. den Einzugsbereich des Gerätes begrenzenden Leitschildern, hat den Vorteil, daß aus dem Bereich der Laufspuren des Fahrwerkes zur Ausbildung und Räumung der Fahrspuren für das Gerät geräumte Abfallmengen ebenfalls dem Einzugsbereich der Einrichtung zum Vermischen an der Gerätefrontseite zugeführt werden. Damit ist sichergestellt, daß keine Restmengen liegen bleiben, die in nachteiliger Weise zu einer Reinfizierung des Kompostes führen können. Die aktiven Räumwerkzeuge an jedem Leitschild erleichtern dem Gerät dabei den Durchgang durch die Anhäufung aus Abfällen. Aufgrund der aktiven Räumwerkzeuge ist es auch möglich, flächige Ablagerungen von Abfällen mit dem Gerät zu durchfahren, umzusetzen und hinter dem Gerät als z.B. dammförmige Miete wieder abzulegen.

Da die Räumeinrichtung um eine vertikale Achse klappbar im Bereich einer Außenecke am Gerät angelenkt ist, lassen sich die Abmessungen des Gerätes bei angeklappten Räumeinrichtungen auf ein Maß verringern, welches noch einen Straßentransport, z.B. auf einem Tieflader, zuläßt. Somit kann das Gerät auch problemlos transportiert werden, so daß sein Einsatz auch an räumlich weiter voneinander entfernt liegenden stationären Lagerplätzen möglich ist.

Jedes Räumwerkzeug ist vorzugsweise eine mit einem Antriebsorgan gekoppelte, vor der Leitfläche rotierende, mit grabenden Vorsprüngen versehene Scheibe. Eine Scheibe kann auf einfachste Weise in Rotation versetzt werden. Von einer Scheibe können in vorteilhafter Weise auch größere Flächen erfaßt und abgetragen werden, wobei die Vorsprünge als Grab- oder Fräswerkzeuge dienen.

Jeder Vorsprung ist z.B. als radial zur Scheibe verlaufende, aus der Scheibenebene vorstehende Leiste ausgebildet. Die Leisten sind an der Scheibe insbesondere derart angeordnet, daß sie auch eine Leitfunktion ausüben, d.h., sie können den erfaßten Abraum erzielt ableiten, insbesondere zum Erfassungsbereich der Einrichtung zum Vermischen an der Gerätefrontseite.

Jedes Räumwerkzeug kann über beliebig geeignete Antriebsorgane angetrieben werden. Vorzugsweise sind Hydromotore als Antriebsorgane vorgesehen, wobei das Antriebsaggregat für den Fahrbetrieb des Gerätes den erforderlichen Druckmittelförderstrom liefern kann.

Weiterhin ist jede Räumeinrichtung lotrecht heb- und senkbar. Diese Maßnahme hat den Vorteil, daß der Abstand zwischen den Unterkanten der Räumeinrichtung und dem Boden, auf dem das Fahrwerk des Gerätes läuft, einstellbar ist. Vorzugsweise ist die Anordnung der das Heben und Senken ermöglichenden Bauteile so getroffen, daß die Räumeinrichtung beispielsweise beim Verfahren des Gerätes mit Hilfe seines Fahrwerkes auf dem stationären Lagerplatz mittels eines Arbeitszylinders angehoben ist und erst abgesenkt wird, sobald der Durchmischungsbetrieb aufgenommen wird. Vorzugsweise wird der das Heben und Senken bewirkende Arbeitszylinder während des Durchmischungsbetriebes des Gerätes in eine Freilaufstellung bzw. Schwimmstellung gebracht, so daß die Räumeinrichtung auch problemlos über Bodenunebenheiten gleiten kann.

Zur Verbesserung der Räumwirkung, um insbesondere Reinfizierung durch liegenbleibende Abfallmengen zu verhindern, ist an der Unterkante jeder Leitfläche eine Schableiste angeordnet. Der Werkstoff für die Schableiste kann z.B. Gummi sein. Die Schableiste schrappt beim Vortrieb des Gerätes über den Boden des stationären Lagerplatzes und säubert somit die von der Räumeinrichtung freigeräumten Fahrspuren vor dem Fahrwerk von liegengebliebenen Resten.

Weiterhin ist die vordere freie Kante jeder Leitfläche durch ein zur Leitfläche abgewinkeltes und somit im Betrieb etwa parallel zur Gerätelängsachse ausgerichtetes Leitblech verlängert. Die Leitbleche begrenzen den seitlichen Arbeitsbereich des Gerätes. Die Leitbleche stechen in die abgelagerten Abfallmengen praktisch wie ein Scheibensech ein, sobald sich das Gerät durch den umzusetzenden Abfall arbeitet. Außerdem verhindern die Leitbleche ein Nachrutschen seitlich außerhalb des Arbeitsbereiches des Gerätes liegender Abfälle. Die Leitbleche erfüllen somit auch die Funktion von Abweisern.

Da die Räumeirnichtung während des Umsetzbetriebes mit dem Gerät mit ihrer Unterkante möglichst im Kontakt mit dem Boden des stationären Lagerplatzes stehen sollen und somit praktisch wie ein Schaber über diesen Boden zu führen sind, um eine einwandfreie Räumung und Reinigung der benötigten Fahrspuren für das der Räumeinrichtung nachlaufende Fahrwerk des Gerätes zu erreichen, ist an der Unterkante jedes Leitbleches eine Schleißleiste angeordnet. Mit den Schleißleisten schaben die Leitbleche der Räumeinrichtung über den Boden des stationären Lagerplatzes, wobei jede Räumeinrichtung ihr Eigengewicht über die Schleißleiste am Boden abstützt. Der Werkstoff für jede Schleißleiste ist vorzugsweise Stahl, wobei jede Schleißleiste leicht auswechselbar an dem zugeordneten Leitblech gehalten ist. Verschlissene Schleißleisten können dadurch einfach ausgewechselt werden.

Ein Ausführungsbeispiel der Erfindung, aus dem sich weitere erfinderische Merkmale ergeben, ist in der Zeichnung dargestellt. Es zeigen:
- Fig. 1: eine Seitenansicht eines Gerätes zum Umsetzen von zu Kompost ausreifenden Abfällen,
- Fig. 2: eine schematische Draufsicht des Gerätes gem. Fig. 1 und
- Fig. 3: eine Ansicht einer Leitfläche eines Leitschildes der Räumeinrichtung des Gerätes in Richtung des Pfeils III in Fig. 2 gesehen.

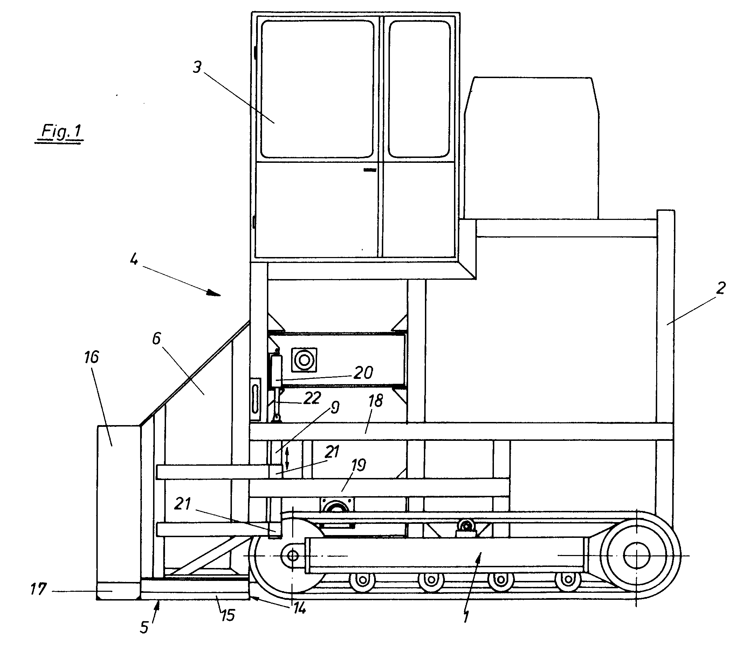

In Fig. 1 ist ein Gerät zum Umsetzen von an stationären Lagerplätzen abgelegten, zu Kompost reifenden organischen Abfällen in der Seitenansicht dargestellt. Das Gerät ist mit einem üblichen Fahrwerk 1, hier einem Gleiskettenfahrwerk, ausgerüstet, trägt eine nicht weiter dargestellte Einrichtung zum Vermischen beim Durchfahren abgelagerter Abfälle aufgenommener Abfallmengen, die an der Rückseite 2 des Gerätes durchmischt und belüftet wieder abgegeben und abgelagert werden. Das Gerät weist ein nicht weiter dargestelltes Antriebsaggregat auf, ist mit einer Fahrerkabine 3 versehen und ist somit als lenkbarer Selbstfahrer ausgebildet. An der Gerätefrontseite 4 befindet sich im Bereich jeder Laufspur des Fahrwerks vor dem Fahrwerk 1 eine Räumeinrichtung 5. Jede Räumeinrichtung hat ein seitlich vor den Einlaß der Vermischeinrichtung gesetztes Leitschild 6, dessen Leitfläche 7 mit aktiv arbeitenden Räumwerkzeugen 8 ausgerüstet ist.

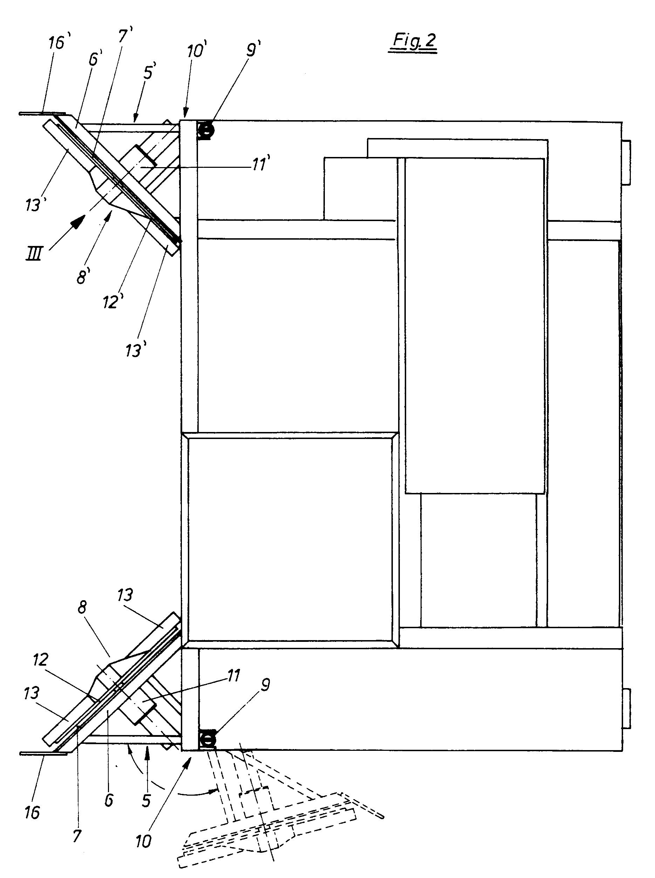

Fig. 2 zeigt eine Draufsicht auf das Gerät gemäß Fig. 1, wobei die seitlich angeordneten Räumeinrichtungen 5,5' mit ihren Leitschildern 6,6' mit den Leitflächen 7,7' und den aktiv arbeitenden Räumwerkzeugen 8,8' erkennbar sind.

Jede Räumeinrichtung ist um eine vertikale Achse 9,9' im Bereich einer Außenecke 10,10' am Gerät angelenkt. Somit kann jede Räumeinrichtung eingeklappt werden. Die Räumeinrichtung 5 ist in Fig. 2 durch gestrichelte Linien in eingeklappter Position dargestellt.

Jedes aktiv arbeitende Räumwerkzeug 8,8' besteht aus mit einem Antriebsorgan 11,11' gekoppelter, vor der Leitfläche 7,7' rotierender Scheibe 12,12', die mit grabenden Vorsprüngen versehen ist. Jeder Vorsprung ist als radial zur Scheibe 12,12' verlaufende, aus der Scheibenebene vorstehende Leiste 13,13' ausgebildet. Als Antriebsorgan 11,11' ist ein Hydromotor vorgesehen.

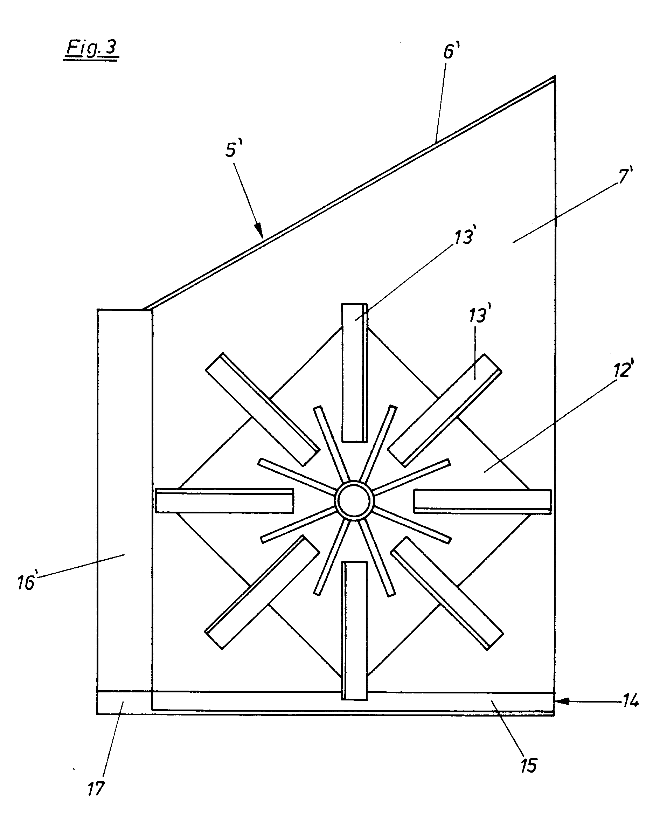

Die Ausbildung der aktiven Räumwerkzeuge ist weiterhin auch in Fig. 3 dargestellt, welche eine Ansicht der Räumeinrichtung 5', in Richtung des Pfeiles III in Fig. 2 gesehen, zeigt. Gleiche Bauteile sind in Fig. 3 mit gleichen Bezugszahlen bezeichnet. Wie sich aus Fig. 2 und Fig. 3 weiterhin ergibt, sind die Leisten 13 und 13' L-Profile, wodurch sie bei Rotation der aktiv arbeitenden Räumwerkzeuge neben der schneidenden bzw. fräsenden Räumfunktion auch als Wurfelemente dienen.

An der Unterkante 14 jeder Leitfläche 7,7' einer Räumeinrichtung 5,5' ist eine Schableiste 15 aus Gummi angeordnet. Weiterhin ist die vordere freie Kante jeder Leitfläche 7,7' durch ein zur Leitfläche abgewinkeltes und somit im Betrieb etwa parallel zur Gerätelängsachse ausgerichtetes Leitblech 16,16' verlängert. An der Unterkante jedes Leitbleches 16,16' ist eine Schleißleiste 17 aus Stahl angeordnet.

Letztlich ist in Fig. 1 noch zu erkennen, daß jede Räumeinrichtung 5 bzw. 5' sowohl um die vertikalen Achsen 9,9' klappbar als auch entlang den Achsen heb- und senkbar ist. Die in Fig. 1 dargestellte Achse 9 ist in Holmen 18 und 19 des Gerätes längsverschiebbar gehalten, wobei zur Erzeugung der Längsschiebebewegung der Arbeitszylinder 20 vorgesehen ist. Jede Räumeinrichtung 5 ist mit Lagern 21 drehbar an der Achse 9 gehalten. Bei Einziehen der Kolbenstange 22 des Arbeitszylinders 20 wird die Achse 9 nach oben gezogen, wobei die Räumeinrichtung durch die mitgehobenen Lager 21 ebenfalls angehoben wird. Im Betrieb wird der Arbeitszylinder 20 auf Schwimmstellung geschaltet, so daß sich die Räumeinrichtungen auch selbsttätig, z.B. zur Überwindung von Bodenunebenheiten, anheben können, wobei die Lager 21 entlang den Achsen 9 bzw. 9' geführt werden.

## Patentansprüche

1. Mobiles Gerät zur Umsetzung von an stationären Lagerplätzen zu Kompost reifenden Anhäufungen organischer Abfälle, mit einem lenkbaren Fahrwerk für den Vorschub des Gerätes durch eine Anhäufung, einer an der Gerätefrontseite im Bereich vor jeder Laufspur des Fahrwerkes angeordneten Räumeinrichtung und mit einer Einrichtung zum Vermischen der beim Durchfahren aufgenommenen und hinter dem Gerät durchmischt wieder abgelegten Abfälle,
dadurch gekennzeichnet,
daß jede Räumeeinrichtung (5,5') ein seitlich vor den Einlaß der Vermischeinrichtung gesetztes Leitschild (6,6') aufweist, dessen Leitfläche (7,7') mit aktiv arbeitenden Räumwerkzeugen (8,8') ausgerüstet ist und daß jede Räumeinrichtung (5,5') um eine vertikale Achse (9,9') klappbar im Bereich einer Außenecke (10,10') angelenkt ist.

2. Gerät nach Anspruch 1, dadurch gekennzeichnet, daß jedes Räumwerkzeug (8,8') eine mit einem Antriebsorgan (11,11') gekoppelte, vor der Leitfläche (7,7') rotierende, mit grabenden Vorsprüngen versehene Scheibe (12,12') ist.

3. Gerät nach Anspruch 2, dadurch gekennzeichnet, daß jeder Vorsprung als radial zur Scheibe (12,12') verlaufende, aus der Scheibenebene vorstehende Leiste (13,13') ausgebildet ist.

4. Gerät nach einem der vorhergehenden Ansprüche, dadurch gekennzeichnet, daß als Antriebsorgan (11,11') für jedes Räumwerkzeug (8,8') ein Hydromotor vorgesehen ist.

5. Gerät nach einem der vorhergehenden Ansprüche, dadurch gekennzeichnet, daß jede Räumeinrichtung (5,5') lotrecht heb- und senkbar ist.

6. Gerät nach einem der vorhergehenden Ansprüche, dadurch gekennzeichnet, daß an der Unterkante (14) jeder Leitfläche (7,7') eine Schableiste (15) angeordnet ist.

7. Gerät nach Anspruch 6, dadurch gekennzeichnet, daß der Werkstoff für die Schableiste (15) Gummi ist.

8. Gerät nach einem der vorhergehenden Ansprüche, dadurch gekennzeichnet, daß die vordere freie Kante jeder Leitfläche (7,7') durch ein zur Leitfläche abgewinkeltes und somit im Betrieb etwa parallel zur Gerätelängsachse ausgerichtetes Leitblech (16,16') verlängert ist.

9. Gerät nach Anspruch 8, dadurch gekennzeichnet, daß an der Unterkante jedes Leitbleches (16,16') eine Schleißleiste (17) angeordnet ist.

10. Gerät nach Anspruch 8, dadurch gekennzeichnet, daß der Werkstoff für die Schleißleiste (17) Stahl ist.

## Claims

1. A mobile machine for shifting and overturning piles of organic waste maturing on stationary storage sites to form compost, with a steerable chassis for advancing the machine through a pile, an excavating device arranged on the machine front side in the region in front of each running track of the chassis, and with a device for mixing the waste which is collected as the machine travels through the waste and is deposited again in a mixed state behind the machine, characterised in that each excavating device (5, 5') comprises a guide plate (6, 6'), whose guide surface (7, 7') is provided with actively operating excavating tools (8, 8'), and each excavating device (5, 5') is articulated to tilt about a vertical axis (9, 9') in the region of an outer corner (10, 10').

2. A machine according to claim 1, characterised in that each excavating tool (8, 8') is a disc (12, 12'), which is coupled with a drive member (11, 11'), rotates in front of the guide surface (7, 7') and is provided with digging projections.

3. A machine according to claim 2, characterised in that each projection is designed as a blade (13, 13') projecting from the disc plane and extending radially to the disc (12, 12').

4. A machine according to one of the preceding claims, characterised in that a hydraulic motor is provided as a drive member (11, 11') for each excavating tool (8, 8').

5. A device according to one of the preceding claims, characterised in that each excavating device (5, 5') can be vertically raised and lowered.

6. A machine according to one of the preceding claims, characterised in that a scraper blade (15) is arranged on the lower edge (14) of each guide surface (7, 7').

7. A machine according to claim 6, characterised in that the material for the scraper blade (15) is rubber.

8. A machine according to one of the preceding claims, characterised in that the front free edge of each guide surface (7, 7') is extended by a guide plate (16, 16'), which is angled relative to the guide surface and is thus aligned approximately parallel to the longitudinal axis of the machine during operation.

9. A machine according to claim 8, characterized in that a wearing strip (17) is arranged on the lower edge of each guide plate (16, 16').

10. A machine according to claim 8, characterised in that the material for the wearing strip (17) is steel.

## Revendications

1. Engin mobile pour le transfert de tas de déchets organiques, se transformant en compost sur des aires de stockage fixes, comportant un châssis dirigeable pour l'avance de l'engin à travers un tas, un dispositif de déblayage, monté sur le côté frontal de l'engin, dans la zone située devant chaque voie de roulement du châssis et comportant un dispositif de malaxage des déchets, repris lors de la traversée et redéposés mélangés derrière l'engin, caractérisé en ce que chaque dispositif de déblayage (5, 5') comporte une lame de guidage (6, 6'), montée sur le côté, devant l'entrée du dispositif de malaxage, dont la surface de guidage (7, 7') est équipée d'outils de déblayage (8, 8') fonctionnant activement et en ce que chaque dispositif de déblayage (5, 5') s'articule dans la zone d'un angle extérieur (10, 10'), de manière à pouvoir se rabattre autour d'un axe vertical (9, 9').

2. Engin selon la revendication 1, caractérisé en ce que chaque outil de déblayage (8, 8') est un disque (12, 12'), accouplé à un organe d'entraînement (11, 11'), tournant devant la surface de guidage (7, 7') et pourvu de parties saillantes de fouille.

3. Engin selon la revendication 2, caractérisé en ce que chaque partie saillante est une barre (13, 13') s'étendant radialement par rapport aux disques (12, 12'), dépassant du plan des disques.

4. Engin selon l'une des revendications précédentes, caractérisé en ce qu'un moteur hydraulique est prévu comme organe d'entraînement (11, 11') pour chaque outil de déblayage (8, 8').

5. Engin selon l'une des revendications précédentes, caractérisé en ce que chaque dispositif de déblayage (5, 5') peut être relevé et abaissé verticalement.

6. Engin selon l'une des revendications précédentes, caractérisé en ce qu'une barre de ratissage (15) est montée sur le bord inférieur (14) de chaque surface de guidage (7, 7').

7. Engin selon la revendication 6, caractérisé en ce que le matériau de la barre de ratissage (15) est du caoutchouc.

8. Engin selon l'une des revendications précédentes, caractérisé en ce que le bord libre avant de chaque surface de guidage (7, 7') est prolongé par une tôle de guidage (16, 16'), coudée par rapport à la surface de guidage et donc orientée, en service, à peu près parallèlement à l'axe longitudinal de l'engin.

9. Engin selon la revendication 8, caractérisé en ce qu'une barre d'usure (17) est prévue sur le bord inférieur de chaque tôle de guidage (16, 16').

10. Engin selon la revendication 8, caractérisé en ce que le matériau de la barre d'usure (17) est de l'acier.
